# EUROPÄISCHE PATENTANMELDUNG

(11) **EP 1 862 787 A2**
(43) Veröffentlichungstag der Anmeldung: **05.12.2007**
(21) Anmeldenummer: 07003376.6
(22) Anmeldetag: 17.02.2007
(51) Int. Cl.: G01L 1/22

(54) **Druckkraftaufnehmer**

(30) Priorität: 30.05.2006 DE 102006025509
(71) Anmelder: GTM Gassmann Testing and Metrology GmbH, 64404 Bickenbach (DE)
(72) Erfinder: Helmut, Gassmann, D-64342 Seeheim-Jugenheim (DE); Gerhard, Schulder, D-64673 Zwingenberg (DE)
(74) Vertreter: Katscher Habermann Patentanwälte

(57) **Zusammenfassung**

Ein Druckkraftaufnehmer mit einem hohlzylindrischen Verformungskörper (1), der an der Bohrungswand (7) seiner zentralen Bohrung Dehnungsmessstreifen (8) trägt, die zu einer elektrischen Messbrücke geschaltet sind, ist an seinem einen Ende des hohlzylindrischen Verformungskörper (1) durch einen einstückig damit ausgeführten Kraftaufnahmekörper (3) abgeschlossen, der eine konvex gewölbte äußere Kraftaufnahmefläche (4) aufweist. Der hohlzylindrische Verformungskörper (1) weist an seinem der gewölbten Kraftaufnahmefläche (4) abgekehrten, offenen Ende eine axial vorspringende Ringfläche (9) zur Krafteinleitung auf. Am inneren Umfang sind auf gleicher axialer Höhe (a) vier Dehnungsmessstreifen (8) oder Dehnungsmessstreifen-Gruppen an der Bohrungswand (7) verteilt appliziert. Die Dehnungsmessstreifen (8) sind zu dem offenen Ende des hohlzylindrischen Verformungskörpers (1) in einem axialen Abstand (a) angeordnet, der das 0,5 bis 1,5-Fache des Bohrungsdurchmessers (d) der zentralen Bohrung (2) beträgt. Der Kabelanschluss für die Dehnungsmessstreifen (8) erfolgt über eine radiale Kabelanschlussbohrung (17) im Krafteinleitungskörper (3).

## Beschreibung

Die Erfindung betrifft einen Drückkraftaufnehmer mit einem hohlzylindrischen Verformungskörper, der an der Bohrungswand seiner zentralen Bohrung Dehnungsmessstreifen trägt, die zu einer elektrischen Messbrücke geschaltet sind.

Bekannte Druckkraftaufnehmer weisen einen hohlzylindrischen Verformungskörper mit einer durchgehenden Bohrung auf. Der Verformungskörper wird an seinen beiden Enden über jeweils eine ringförmige Fläche belastet. Die unter der Druckbelastung auftretende axiale Stauchung und/oder tangentiale Dehnung wird von Dehnungsmessstreifen erfasst, die an der Innenwand der Bohrung appliziert und zu einer elektrischen Messbrücke geschaltet sind.

Die an den ringförmigen Krafteinleitungsflächen infolge der radialen Dehnung auftretenden radialen Reibungskräfte wirken der Verformung des Verformungskörpers zumindest in der Nachbarschaft der Krafteinleitungsflächen entgegen. Deshalb müssen die Dehnungsmessstreifen in ausreichenden Abständen zu beiden Enden des Verformungskörpers angeordnet werden, wodurch sich eine verhältnismäßig große Bauhöhe ergibt.

Hinzu kommt noch, dass die Krafteinleitung an beiden Enden des Verformungskörpers mit möglichst hoher Genauigkeit axial erfolgen muss. Dies erfordert zusätzliche konstruktive Maßnahmen, die zu einer weiteren Vergrößerung der Bauhöhe des Druckkraftaufnehmers führen.

Aufgabe der Erfindung ist es daher, einen Druckkraftaufnehmer der eingangs genannten Gattung so auszugestalten, dass mit einfachen konstruktiven Maßnahmen und geringem Fertigungsaufwand eine axiale Krafteinleitung gewährleistet ist.

Diese Aufgabe wird erfindungsgemäß dadurch gelöst, dass der hohlzylindrische Verformungskörper an seinem einen Ende durch einen einstückig damit ausgeführten Kraftaufnahmekörper abgeschlossen ist, der eine konvex gewölbte äußere Kraftaufnahmefläche aufweist.

Durch die einstückige Ausführung des hohlzylindrischen Verformungskörpers mit einem Kraftaufnahmekörper, der die Bohrung des Verformungskörpers an einem Ende abschließt, und an seiner Außenfläche gewölbt ist, wird ein kompakter, raumsparender Aufbau des Druckkraftaufnehmers erreicht, wobei zugleich sichergestellt wird, dass von der gewölbten Kraftaufnahmefläche her keine störenden Einflüsse bei der Krafteinleitung auf den Verformungskörper ausgeübt werden, weil die Krafteinleitung dort nicht über eine Ringfläche, sondern über einen eng begrenzten, zentralen Bereich der gewölbten Kraftaufnahmefläche erfolgt. Die Dehnungsmessstreifen können daher verhältnismäßig nahe am Bohrungsende angeordnet werden, wodurch sich eine Verringerung der Bauhöhe ergibt.

Vorteilhafte Ausgestaltungen des Erfindungsgedankens sind Gegenstand von Unteransprüchen.

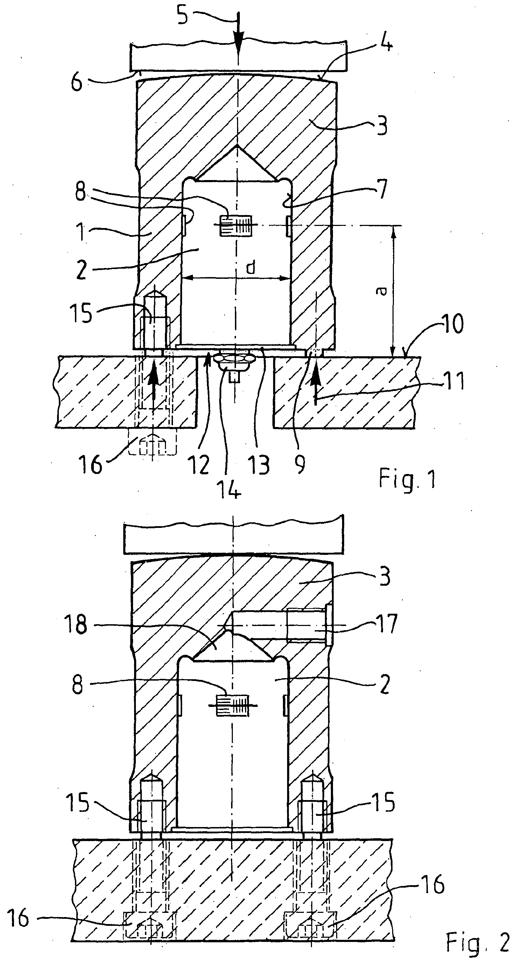

Die Erfindung wird nachfolgend an Ausführungsbeispielen näher erläutert, die in der Zeichnung dargestellt sind. Die Fig. 1-3 zeigen jeweils Längsschnitte durch unterschiedliche Druckkraftaufnehmer.

Der in Fig. 1 dargestellte Druckkraftaufnehmer weist einen hohlzylindrischen Verformungskörper 1 mit einer zentralen Bohrung 2 auf. An seinem einen, in Fig. 1 oberen Ende ist der hohlzylindrische Verformungskörper 1 durch einen einstückig damit ausgeführten Kraftaufnahmekörper 3 abgeschlossen, der eine konvex gewölbte, beim dargestellten Ausführungsbeispiel als Kugelkalotte ausgeführte Kraftaufnahmefläche 4 aufweist. Die in Fig. 1 durch einen Pfeil 5 dargestellte, zu messende Kraft wird von einer beispielsweise ebenen Druckfläche 6 zentral übe die gewölbte Kraftaufnahmefläche 4 in den Kraftaufnahmekörper 3 eingeleitet. An der Bohrungswand 7 der zentralen Bohrung 2 sind mehrere Dehnungsmessstreifen 8 appliziert, die zu einer (nicht dargestellten) elektrischen Messbrücke geschaltet sind. Die Dehnungsmessstreifen 8, die beispielsweise als Dehnungsmessstreifen-Gruppen mit tangentialer und axialer Messrichtung ausgeführt sein können, erfassen die bei einer axialen Belastung des Verformungskörpers 1 auftretenden axialen und tangentialen Verformungen und liefern ein der zu messenden Kraft 5 proportionales Messsignal.

Der hohlzylindrische Verformungskörper 1 weist an seinem der gewölbten Krafteinleitungsfläche 4 abgekehrten, offenen, in der Zeichnung unteren Ende eine axial vorspringende Ringfläche 9 zur Krafteinleitung auf. Die Ringfläche 9 ist auf einer Lastaufnahmefläche 10 abgestützt. Die Ringfläche 9 ist schmaler als die Stirnseite des hohlzylindrischen Verformungskörpers ausgeführt und erfährt bei der Belastung eine verhältnismäßig hohe Flächenpressung. Dies führt zu einer gleichmäßigen Krafteinleitung über den gesamten Umfang. Die eingeleitete Kraft ist in Fig. 1 mit Pfeilen 11 angedeutet. Der hohlzylindrische Verformungskörper 1 weist an seinem der gewölbten Krafteinleitungsfläche 4 abgekehrten, offenen Ende eine Öffnung 12 auf, die durch eine Membran 13 verschlossen ist.

Der Kabelanschluss für die Dehnungsmessstreifen 8 erfolgt bei diesem Ausführungsbeispiel über eine Leitungsdurchführung 14 in der Membran 13.

Der hohlzylindrische Verformungskörper 1 weist an seinem offenen Ende mehrere achsparallele Gewindebohrungen 15 auf, in die jeweils eine in der Zeichnung nur angedeutete Befestigungsschraube 16 zur Verbindung mit der Lastaufnahmefläche 10 einschraubbar ist. Die Befestigungsschrauben 16 werden so stark angezogen, dass die in die Ringfläche 9 eingeleitete Vorspannkraft ca. 20 % der Nennkraft beträgt.

Am inneren Umfang verteilt sind auf gleicher axialer Höhe vier Dehnungsmessstreifen 8 oder Dehnungsmessstreifen-Gruppen an der Bohrungswand 7 appliziert. Die Dehnungsmessstreifen 8 sind zu dem offenen Ende des Verformungskörpers 1 in einem axialen Abstand a angeordnet, der das 0,5 bis 1,5-Fache des Bohrungsdurchmessers d der zentralen Bohrung 2 beträgt.

Das in Fig. 2 dargestellte Ausführungsbeispiel unterscheidet sich von dem Ausführungsbeispiel nach Fig. 1 nur dadurch, dass der Kabelanschluss für die Dehnungsmessstreifen 8 über eine radiale Kabelanschlussbohrung 17 im Krafteinleitungskörper 3 erfolgt. Eine Vertiefung 18 am inneren Ende der zentralen Bohrung 2 steht mit der radialen Kabelanschlussbohrung 17 in Verbindung und ermöglicht die Kabelführung zu den Dehnungsmessstreifen 8.

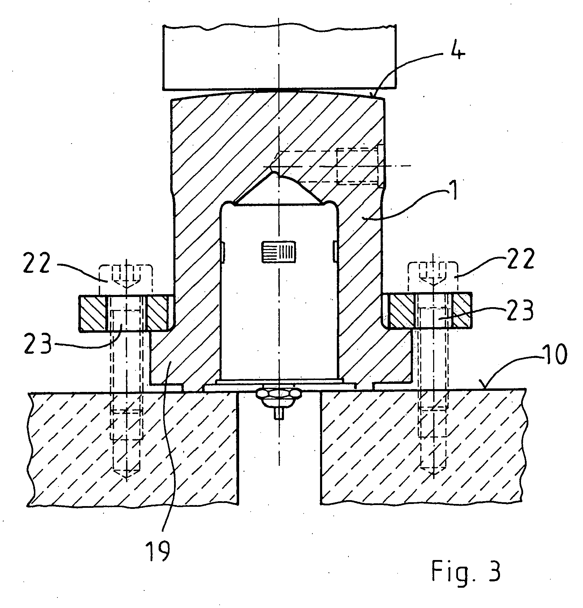

Bei dem in Fig. 3 dargestellten Ausführungsbeispiel weist der hohlzylindrische Verformungskörper 1 an seinem offenen Ende einen radial vorspringenden Umfangsflansch 19 auf, der mittels eines Überwurfrings 20 gegen die Lastaufnahmefläche 10 spannbar ist. Der Überwurfring 20 liegt mit einem nach innen vorspringenden Bereich 21 auf dem radial vorspringenden Umfangsflansch 19 auf.

Der Überwurfring 20 ist mittels mehrerer Befestigungsschrauben 22 gegen die Lastaufnahmefläche 10 verspannt. Die Befestigungsschrauben 22 erstrecken sich durch mehrere, am Umfang des Überwurfrings 20 verteilte, achsparallele Schraubenbohrungen 23.

## Patentansprüche

1. Druckkraftaufnehmer mit einem hohlzylindrischen Verformungskörper, der an der Bohrungswand seiner zentralen Bohrung Dehnungsmessstreifen trägt, die zu einer elektrischen Messbrücke geschaltet sind, **dadurch gekennzeichnet, dass** der hohlzylindrische Verformungskörper (1) an seinem einen Ende durch einen einstückig damit ausgeführten Kraftaufnahmekörper (3) abgeschlossen ist, der eine konvex gewölbte äußere Kraftaufnahmefläche (4) aufweist.

2. Druckkraftaufnehmer nach Anspruch 1, **dadurch gekennzeichnet, dass** der hohlzylindrische Verformungskörper (1) an seinem der gewölbten Kraftaufnahmefläche (4) abgekehrten, offenen Ende eine axial vorspringende Ringfläche (9) zur Krafteinleitung aufweist.

3. Druckkraftaufnehmer nach Anspruch 1, **dadurch gekennzeichnet, dass** der hohlzylindrische Verformungskörper an seinem der gewölbten Krafteinleitungsfläche (4). abgekehrten, offenen Ende eine durch eine Membran (13) verschlossene Öffnung (12) aufweist.

4. Druckkraftaufnehmer nach Anspruch 1, **dadurch gekennzeichnet, dass** am inneren Umfang verteilt auf gleicher axialer Höhe (a) vier Dehnungsmessstreifen (8) oder Dehnungsmessstreifen-Gruppen an der Bohrungswand (7) appliziert sind.

5. Druckkraftaufnehmer nach Anspruch 1, **dadurch gekennzeichnet, dass** die Dehnungsmessstreifen (8) zu dem offenen Ende des hohlzylindrischen Verformungskörpers (1) in einem axialen Abstand (a) angeordnet sind, der das 0,5-1,5-Fache des Bohrungsdurchmessers (d) der zentralen Bohrung (2) beträgt.

6. Druckkraftaufnehmer nach Anspruch 1, **dadurch gekennzeichnet, dass** die konvex gewölbte Kraftaufnahmefläche (4) eine Kugelkalotte ist.

7. Druckkraftaufnehmer nach Anspruch 1, **dadurch gekennzeichnet, dass** der Kabelanschluss für die Dehnungsmessstreifen (8) über eine radiale Kabelanschlussbohrung (17) im Krafteinleitungskörper (3) erfolgt.

8. Druckkraftaufnehmer nach Anspruch 3, **dadurch gekennzeichnet, dass** der Kabelanschluss für die Dehnungsmessstreifen (8) über eine Leitungsdurchführung (14) in der Membran (13) erfolgt.

9. Druckkraftaufnehmer nach Anspruch 1, **dadurch gekennzeichnet, dass** der hohlzylindrische Verformungskörper (1) an seinem offenen Ende mehrere achsparallele Gewindebohrungen (15) aufweist, in die jeweils eine Befestigungsschraube (16) zur Verbindung mit einer Lastaufnahmefläche (10) eingeschraubt ist.

10. Druckkraftaufnehmer nach Anspruch 1, **dadurch gekennzeichnet, dass** der hohlzylindrische Verformungskörper (1) an seinem offenen Ende einen radial vorspringenden Umfangsflansch (19) aufweist, der mittels eines mehrere Schraubenbohrungen (24) aufweisenden Überwurfrings (20) gegen eine Lastaufnahmefläche (10) spannbar ist.
